# EUROPEAN PATENT APPLICATION

(11) **EP 3 544 306 A1**
(43) Date of publication of application: **25.09.2019**
(21) Application number: 17871821.9
(22) Date of filing: 27.09.2017
(51) Int. Cl.: H04N 21/41, H04N 21/443, H04N 21/472, G06F 3/0488, G09G 5/00

(54) **METHOD AND APPARATUS FOR SWITCHING CHANNELS IN SMART INTERACTION TABLET**

(30) Priority: 17.11.2016 CN 201611030860
(71) Applicant: Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: WU, Changjun, Guangzhou Guangdong 510663 (CN)
(74) Representative: Appleyard Lees IP LLP
(86) International application number: PCT/CN2017/103589
(87) International publication number: WO 2018/090735

(57) **Abstract**

The present disclosure discloses a method and an apparatus of channel switching in a smart interaction board. The method includes: receiving a channel switching request of switching from a first channel to a second channel; detecting a state of a system associated with the second channel; and when the state of the system associated with the second channel is a sleep state or a dormant state, according to the channel switching request, switching a touch receiving service to the system associated with the second channel and switching a current display from the first channel to the second channel, and waking up the system associated with the second channel. That is to say, after acquiring the channel switch request, the channel switching is performed, that is, the touch receiving service switching is switched to the system associated with the second channel and the current display is switched from the first channel to the second channel, and the system associated with the second channel in the sleep state or the dormant state is waked up, so that the system associated with the second channel can be used normally while the channel is switched to the second channel, without realizing the wake-up of the system associated with the second channel through a user's operation after the channel switching. Therefore, the operation process is reduced and the switching process is accelerated, and the efficiency of the channel switching is improved as a result.

## Description

### TECHNICAL FIELD

The disclosure relates to the field of smart technology and, in particular, to a method and an apparatus of channel switching in a smart interaction board.

### BACKGROUND

With the development of smart technology, many smart products have been widely used in people's lives, for example, a dual-system smart interaction board, which generally includes two different operating systems, such as the Android system and the Windows system. A human-computer interaction all-in-one machine is realized by operating the content displayed on a display board through touch technology, which not only has a function of high-definition display as a traditional LCD TV, but also has a computer function through a built-in personal computer (PC) module (ie., a PC end). In addition, functions such as channel switching are realized through touch technology by performing touch operations on the smart interaction board, thereby realizing human-computer interactions.

When the Android (Android) system is installed and operated in the smart interaction board, a corresponding channel is a TV channel, and a TV signal is transmitted through the TV channel and displayed for watching by a user. When the smart interaction board is switched on the TV channel, the PC module corresponding to the PC channel may be set as entering a sleep mode to save energy. When the user needs to switch the Android system to the Windows system or the Linux system running on the built-in PC end to continue using the PC, a current display channel signal needs to be switched to the built-in PC end. That is, the smart interaction board needs to be switched from the TV channel to the PC channel. However, at this time, the PC module is still in a sleep state. In order that the smart interaction board can be used normally after being switched to the PC channel, during switching the channel, and after switching the touch and the display, an USB device or a key operation is still needed to wake up the PC, thus resulting in inefficiency of the entire channel switching process.

### SUMMARY

Based on this, it is necessary to provide an efficiency improved method and apparatus of channel switching in a smart interaction board regarding the problem of inefficiency of the channel switching.

A method of channel switching in a smart interaction board, including the following steps:
receiving a channel switching request of switching from a first channel to a second channel;
detecting a state of a system associated with the second channel; and
when the state of the system associated with the second channel is a sleep state or a dormant state, according to the channel switching request, switching a touch receiving service to the system associated with the second channel and switching a current display from the first channel to the second channel, and waking up the system associated with the second channel.

The present disclosure also provides an apparatus of channel switching in a smart interaction board, including:
a switching request receiving module configured to receive a channel switching request of switching from a first channel to a second channel;
a state detecting module configured to detect a state of a system associated with the second channel; and
a switching module configured to when the state of the system associated with the second channel is a sleep state or a dormant state, according to the channel switching request, switch a touch receiving service to the system associated with the second channel and switch a current display from the first channel to the second channel, and wake up the system associated with the second channel.

Regarding above mentioned method and apparatus of channel switching in a smart interaction board, in the above mentioned method of channel switching in the smart interaction board, a channel switching request of switching from a first channel to a second channel is received, a state of a system associated with the second channel is detected; and when the state of the system associated with the second channel is a sleep state or a dormant state, according to the channel switching request, a touch receiving service is switched to the system associated with the second channel and a current display is switched from the first channel to the second channel, and the system associated with the second channel is waked up. Through the above mentioned method and apparatus of channel switching in the smart interaction board, after acquiring the channel switch request, the channel switching is performed, that is, the touch receiving service switching is switched to the system associated with the second channel and the current display is switched from the first channel to the second channel, and the system associated with the second channel in the sleep state or the dormant state is waked up, so that the smart interaction board can be used normally while the channel is switched to the second channel, without realizing the wake-up of the system associated with the second channel through a user's operation after the channel switching. Therefore, the operation process is reduced and the switching process is accelerated, and the efficiency of the channel switching is improved as a result.

### BRIEF DESCRIPTION OF THE DRAWINGS

FIG. 1 is a flowchart of a method of channel switching in a smart interaction board according to an embodiment;
FIG. 2 is a flowchart of a method of channel switching in a smart interaction board according to another embodiment; and
FIG. 3 is a block diagram of an apparatus of channel switching in a smart interaction board according to an embodiment.

### DESCRIPTION OF EMBODIMENTS

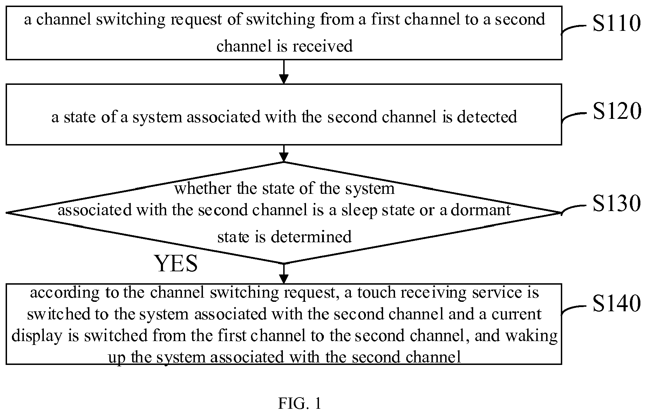

Referring to FIG. 1, a method of channel switching in a smart interaction board according to an embodiment is provided, which includes the following steps:
In step S110: a channel switching request of switching from a first channel to a second channel is received.

The smart interaction board generally includes a touch box, an Android mainboard connected to the touch box, a PC end, and a micro controller (MCU) connected between an Android terminal and the PC end. The Android mainboard, the PC end, and the MCU are built in a housing of the smart interaction board. The PC end can run a Windows system or a Linux system, and the Android end can run an Android system, correspondingly. That is to say, the smart interaction board may include a plurality of channels for receiving signals, and different channels may transmit different signals correspondingly, so that the smart interaction board may display different contents while in different channels which. For example, may include an Android channel (a TV channel) and a PC Channel and etc. The content in a TV signal may be displayed for watching by a user through the Android channel, and a Windows system or Linux system interface may be displayed through the PC channel. When the smart interaction board is in the TV channel, the user can watch TV through the smart interaction board, and when in the PC channel, the smart interaction board may have a computer function through the built-in PC end, that is, the smart interaction board may be used as a personal computer.

When channel switching needs to be performed on the smart interaction board, first a channel switching button on the touch box of the smart interaction board needs to be clicked, to receive a channel switching request, and the channel may be switched according to the channel switching request. That is, according to the channel switching request of switching from the first channel to the second channel, the smart interaction board may be switched from the first channel to the second channel, where the first channel may be the TV channel or the PC channel, and the corresponding second channel may be the PC channel or the TV channel. That is to say, when the first channel is the TV channel, the second channel is the PC channel, the smart interaction board may be switched from the TV channel to the PC channel according to the channel switching request at this time. When the first channel is the PC channel, the second channel is the TV channel, the smart interaction board can be switched from the PC channel to the TV channel according to the channel switching request at this time. In one specific example, the first channel is the TV channel, the second channel is the PC channel, a system associated with the first channel is the Android system, a system associated with the second channel is the Windows system, the smart interaction board is currently in the first channel (the Android channel corresponding to the Android system). At this time, a screen of the smart interaction board displays an interface, which corresponds to the first channel, of the system associated with the first channel, for example, the Android system. If it needs to be switched to the second channel (the PC channel corresponding to the Windows system), first a button of switching to the second channel on the touch box of the smart interaction board needs to be clicked, as a consequence, a channel switching request of switching from the first channel to the second channel is generated, thereby the channel switching request of switching from the first channel to the second channel may be received.

In step S120: a state of a system associated with the second channel is detected.

After receiving the channel switching request of switching from the first channel to the second channel. That is, the smart interaction board needs to be switched from the first channel to the second channel. However, what is correspondingly displayed through the second channel is the display interface of the system associated with the second channel. If the system associated with the second channel is still in a sleep or a dormant state, the display interface of the system associated with the second channel cannot be normally displayed, which may result in that even if the channel is switched, the system associated with the second channel corresponding to the switched second channel cannot work normally. Therefore, the state of the system associated with the second channel needs to be detected. If the system is in the sleep or dormant state, the system associated with the second channel is still need to be waked up to make it work normally, thus ensuring normal working after the channel switching.

In step S130: whether the state of the system associated with the second channel is a sleep state or a dormant state is determined.

When the state of the system associated with the second channel is the sleep state or the dormant state, perform the following steps:
In step S140: according to the channel switching request, a touch receiving service is switched to the system associated with the second channel and a current display is switched from the first channel to the second channel, and waking up the system associated with the second channel.

When the smart interaction board is in the first channel, the user performs operating control on the system associated with the first channel of the smart board. For example, when the first channel is the TV channel, and the system associated with the first channel is the Android system, the user may watch TV programs through the smart interaction board, and the user may perform program selecting through the touch control to the smart interaction board. That is to say, when the smart interaction board is in the first channel and works through the system associated with the first channel, the touch receiving service is in the system associated with the first channel. That is to say, touch data generated through an operation on the touch box of the smart interaction board is transmitted to the system associated with the first channel, and the system associated with the first channel then responses to the touch. When the first channel needs to be switched to the second channel, the touch receiving receive needs to be switched to the system associated with the second channel. That is to say, after channel switching, the touch data generated through the operation on the touch box is transmitted to the system associated with the second channel, and the system associated with the second channel then responses to the touch to realize the touch control to the system associated with the second channel.

In addition, when the smart interaction board is in the first channel, the display interface of the system associated with the first channel is displayed. The user may watch and operate the display interface of the system associated with the first channel. During the process of switching from the first channel to the second channel, not only the above mentioned switching of the touch receiving service needs to be performed, but also the current display of the smart interaction board needs to be switched from the first channel to the second channel, such that the smart interaction board after the switching displays the display interface of the system associated with the second channel.

Furthermore, when the switching of the touch receiving service and the switching of the current display are performed, if it is detected that the state of the system associated with the second channel is the sleep state or the dormant state, the system associated with the second channel also needs to be waked up, such that the system associated with the second channel may work normally after the switching and ensures the smart interaction board may work normally. When it is detected that the state of the system associated with the second channel is the sleep state or the dormant state, which means previously when being in the first channel (corresponding to the system associated with the first channel), for energy saving purpose, the system associated with the second channel is controlled to be in the sleep or the dormant state. At this time, according to the channel switching request, the touch receiving service is switched to the system associated with the second channel and the current display is switched from the first channel to the second channel. That is, the first channel is switched to the second channel, and the system associated with the second channel is waked up, making the system associated with the second channel work normally. Such that the smart interaction board may work normally immediately after switching from the first channel to the second channel and the user may perform operations to the system associated with the second channel on the smart interaction board hereupon.

In the above mentioned method of channel switching in the smart interaction board, a channel switching request of switching from a first channel to a second channel is received, a state of a system associated with the second channel is detected; and when the state of the system associated with the second channel is a sleep state or a dormant state, according to the channel switching request, a touch receiving service is switched to the system associated with the second channel and a current display is switched from the first channel to the second channel, and the system associated with the second channel is waked up. Through the above mentioned method of channel switching in the smart interaction board, after acquiring the channel switch request, the channel switching is performed, that is, the touch receiving service switching is switched to the system associated with the second channel and the current display is switched from the first channel to the second channel, and the system associated with the second channel in the sleep state or the dormant state is waked up, so that the smart interaction board can be used normally while the channel is switched to the second channel, without realizing the wake-up of the system associated with the second channel through a user's operation after the channel switching. Therefore, the operation process is reduced and the switching process is accelerated, and the efficiency of the channel switching is improved as a result.

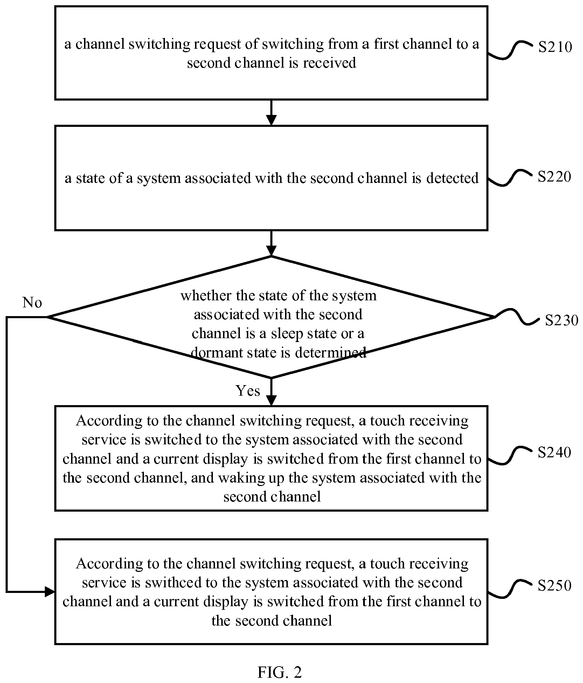

Referring to FIG. 2, in one embodiment, the method of channel switching in the smart interaction board, when it is detected that the state of the system associated with the second channel is a work state, further includes the following step:
In step S250: according to the channel switching request, a touch receiving service is switched to the system associated with the second channel and a current display is switched from the first channel to the second channel.

After the channel switching request of switching from the first channel to the second channel is received and the state of the system associated with the second channel is detected, if the state of the system associated with the second channel is the work state, i.e.,the system associated with the second channel is not in the sleep or dormant state, which means that the system associated with the second channel may work normally, that is to say, the smart interaction board may operate the system associated with the second channel normally after switching from the first channel to the second channel, and the user may use the smart interactive board normally, thereby, according to the channel switching request, the touch receiving service is switched to the system associated with the second channel and the current display is switched from the first channel to the second channel. At this time, the smart interaction board may use the system associated with the second channel which is in the work state immediately after switching to the second channel.

In one of the embodiments, where the waking up the system associated with the second channel includes the step: a waking up instruction is transmitted to the system associated with the second channel, to control the system associated with the second channel to switch from the sleep state or the dormant state to the work state.

Specifically, the smart interaction board includes the system associated with the first channel corresponding to the first channel and the system associated with the second channel corresponding to the second channel. When the smart interaction board works in the first channel through the system associated with the first channel, for the sake of energy saving, the system associated with the second channel corresponding to the second channel enters into the sleep or dormant state. When it needs to work in the second channel through the system associated with the second channel, first the touch receiving service is switched to the system associated with the second channel and the current display is switched from the first channel to the second channel. If the system associated with the second channel at this time is in the sleep or dormant state, it needs to be waked up such that the smart interaction board may work normally through the system associated with the second channel after the channel switching. Specifically, through transmitting the waking up instruction to the system associated with the second channel, the system associated with the second channel is controlled to switch from the sleep state or the dormant state to the work state. That is to say, the waking up instruction is transmitted to the system associated with the second channel, and the system associated with the second channel is switched from the sleep state or the dormant state to the work state upon receiving the waking up instruction.

In one of the embodiments, where after the according to the channel switching request, switching the touch receiving service to the system associated with the second channel and switching the current display from the first channel to the second channel, and waking up the system associated with the second channel, the method further includes the step: a touch request for a display interface of the system associated with the second channel is received; the touch request is transmitted to the system associated with the second channel; and a result view obtained by the system associated with the second channel is acquired and displayed in response to the touch request through performing an operation corresponding to the touch request.

After the smart interaction board is switched from the first channel to the second channel, and the system associated with the second channel is in the work state after being waked up, the display interface of the system associated with the second channel is displayed on the smart interaction board. At this time, the touch operation control may be performed to the system associated with the second channel of the smart interaction board, that is, the user may perform the touch operation on the display interface of the system associated with the second channel, the touch request for the system associated with the second channel may be accepted by the smart interaction board, and transmitted to the system associated with the second channel. The system associated with the second channel performs a corresponding operation in response to the touch request to acquire the result view. Through acquiring and displaying the result view obtained by the system associated with the second channel in response to the touch request through performing an operation corresponding to the touch request, the user may watch the displayed result view after performing the touch operation immediately.

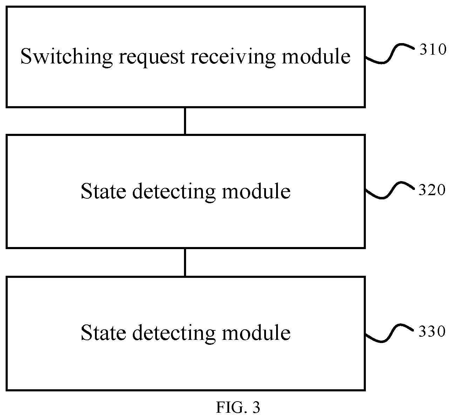

Referring to FIG. 3, an apparatus of channel switching in a smart interaction board according to an embodiment is further provided, including:
A switching request receiving module 310 configured to receive a channel switching request of switching from a first channel to a second channel.

The smart interaction board may include a plurality of channels for receiving signals, and different channels may transmit different signals correspondingly, so that the smart interaction board may display different contents while in different channels which, for example, may include an Android channel (a TV channel) and a PC Channel and etc. The content in a TV signal may be displayed for watching by a user through the Android channel, and a Windows system or Linux system interface may be displayed through the PC channel. When the smart interaction board is in the TV channel, the user can watch TV through the smart interaction board, and when in the PC channel, the smart interaction board may have a computer function through the built-in PC end, that is, the smart interaction board may be used as a personal computer.

When channel switching needs to be performed on the smart interaction board, first a channel switching button on the touch box of the smart interaction board needs to be clicked, to receive a channel switching request, and the channel may be switched according to the channel switching request. That is, according to the channel switching request of switching from the first channel to the second channel, the smart interaction board may be switched from the first channel to the second channel, where the first channel may be the TV channel or the PC channel, and the corresponding second channel may be the PC channel or the TV channel. That is to say, when the first channel is the TV channel, the second channel is the PC channel, the smart interaction board may be switched from the TV channel to the PC channel according to the channel switching request at this time. When the first channel is the PC channel, the second channel is the TV channel, the smart interaction board can be switched from the PC channel to the TV channel according to the channel switching request at this time. In one specific example, the first channel is the TV channel, the second channel is the PC channel, a system associated with the first channel is the Android system, a system associated with the second channel is the Windows system, the smart interaction board is currently in the first channel (the Android channel corresponding to the Android system). At this time, a screen of the smart interaction board displays an interface, which corresponds to the first channel, of the system associated with the first channel, for example, the Android system. If it needs to be switched to the second channel (the PC channel corresponding to the Windows system), first a button of switching to the second channel on the touch box of the smart interaction board needed to be clicked, as a consequence, a channel switching request of switching from the first channel to the second channel is generated, thereby the channel switching request of switching from the first channel to the second channel may be received.

A state detecting module 320 configured to detect a state of a system associated with the second channel.

After receiving the channel switching request of switching from the first channel to the second channel, that is, the smart interaction board needs to be switched from the first channel to the second channel. However, what is correspondingly displayed through the second channel is the display interface of the system associated with the second channel. If the system associated with the second channel is still in a sleep or a dormant state, the display interface of the system associated with the second channel cannot be normally displayed, which may result in that even if the channel is switched, the system associated with the second channel corresponding to the switched second channel cannot work normally. Therefore, the state of the system associated with the second channel needs to be detected. If the system is in the sleep or dormant state, the system associated with the second channel is still need to be waked up to make it work normally, thus ensuring normal working after the channel switching.

A switching module 330 configured to when the state of the system associated with the second channel is a sleep state or a dormant state, according to the channel switching request, switch a touch receiving service to the system associated with the second channel and switch a current display from the first channel to the second channel, and wake up the system associated with the second channel.

When the smart interaction board is in the first channel, the user performs operating control on the system associated with the first channel of the smart board. For example, when the first channel is the TV channel, and the system associated with the first channel is the Android system, the user may watch TV programs through the smart interaction board, and the user may perform program selecting through the tough control to the smart interaction board. That is to say, when the smart interaction board is in the first channel and works through the system associated with the first channel, the touch receiving service is in the system associated with the first channel. That is to say, touch data generated through an operation on the touch box of the smart interaction board is transmitted to the system associated with the first channel, and the system associated with the first channel then responses to the touch. When the first channel needs to be switched to the second channel, the touch receiving receive needs to be switched to the system associated with the second channel. That is to say, after channel switching, the touch data generated through the operation on the touch box is transmitted to the system associated with the second channel, and the system associated with the second channel then responses to the touch to realize the touch control to the system associated with the second channel.

In addition, when the smart interaction board is in the first channel, the display interface of the system associated with the first channel is displayed. The user may watch and operate the display interface of the system associated with the first channel. During the process of switching from the first channel to the second channel, not only the above mentioned switching of the touch receiving service needs to be performed, but also the current display of the smart interaction board needs to be switched from the first channel to the second channel, such that the smart interaction board after the switching displays the display interface of the system associated with the second channel.

Furthermore, when the switching of the touch receiving service and the switching of the current display are performed, if it is detected that the state of the system associated with the second channel is the sleep state or the dormant state, the system associated with the second channel also needs to be waked up, such that the system associated with the second channel may work normally after the switching and ensures the smart interaction board may work normally. When it is detected that the state of the system associated with the second channel is the sleep state or the dormant state, which means previously when being in the first channel (corresponding to the system associated with the first channel), for energy saving purpose, the system associated with the second channel is control to be in the sleep or the dormant state. At this time, according to the channel switching request, the touch receiving service is switched to the system associated with the second channel and the current display is switched from the first channel to the second channel, that is, the first channel is switched to the second channel, and the system associated with the second channel is waked up, making the system associated with the second channel work normally. Such that the smart interaction board may work normally immediately after switching from the first channel to the second channel and the user may perform operation to the system associated with the second channel on the smart interaction board hereupon.

In the above mentioned apparatus of channel switching in the smart interaction board, a channel switching request of switching from a first channel to a second channel is received, a state of a system associated with the second channel is detected; and when the state of the system associated with the second channel is a sleep state or a dormant state, according to the channel switching request, a touch receiving service is switched to the system associated with the second channel and a current display is switched from the first channel to the second channel, and the system associated with the second channel is waked up. Through the above mentioned apparatus of channel switching in the smart interaction board, after acquiring the channel switch request, the channel switching is performed, that is, the touch receiving service switching is switched to the system associated with the second channel and the current display is switched from the first channel to the second channel, and the system associated with the second channel in the sleep state or the dormant state is waked up, so that the smart interaction board can be used normally while the channel is switched to the second channel, without realizing the wake-up of the system associated with the second channel through a user's operation after the channel switching. Therefore, the operation process is reduced and the switching process is accelerated, and the efficiency of the channel switching is improved as a result.

In one embodiment, the switching module is further configured to when the state detecting module detects that a state of the system associated with the second channel is a work state, according to the channel switching request, switch the touch receiving service to the system associated with the second channel and switch the current display from the first channel to the second channel.

After receiving the channel switching request of switching from the first channel to the second channel and detecting the state of the system associated with the second channel, if the detected state of the system associated with the second channel is the work state, which means that the system associated with the second channel may work normally, that is to say, the smart interaction board may operate the system associated with the second channel normally after switching from the first channel to the second channel, and the user may use the smart interactive board normally, thereby, according to the channel switching request, the touch receiving service is switched to the system associated with the second channel and the current display is switched from the first channel to the second channel. At this time, the smart interaction board may use the system associated with the second channel which is in the work state immediately after switching to the second channel.

In one of the embodiments, the switching module includes:
A waking up module configured to transmit a waking up instruction to the system associated with the second channel, to control the system associated with the second channel to switch from the sleep state or the dormant state to the work state.

Specifically, the smart interaction board includes the system associated with the first channel corresponding to the first channel and the system associated with the second channel corresponding to the second channel. When the smart interaction board works in the first channel through the system associated with the first channel, for the sake of energy saving, the system associated with the second channel corresponding to the second channel enters to the sleep or dormant state. When it needs to work in the second channel through the system associated with the second channel, first the touch receiving service is switched to the system associated with the second channel and the current display is switched from the first channel to the second channel. If the system associated with the second channel at this time is in the sleep or dormant state, it needs to be waked up such that the smart interaction board may work normally through the system associated with the second channel after the channel switching. Specifically, through transmitting the waking up instruction to the system associated with the second channel, the system associated with the second channel is controlled to switch from the sleep state or the dormant state to the work state. That is to say, the waking up instruction is transmitted to the system associated with the second channel, and the system associated with the second channel is switched from the sleep state or the dormant state to the work state upon receiving the waking up instruction.

In one of the embodiments, the apparatus of channel switching in the smart interaction board further includes: a touch request receiving module, a request transmitting module, and a view acquiring module.

The touch request receiving module is configured to receive a touch request for a display interface of the system associated with the second channel.

The request transmitting module is configured to transmit the touch request to the system associated with the second channel.

The view acquiring module is configured to acquire and display a result view obtained by the system associated with the second channel in response to the touch request through performing an operation corresponding to the touch request.

After the smart interaction board is switched from the first channel to the second channel, and the system associated with the second channel is in the work state after being waked up, the display interface of the system associated with the second channel is displayed on the smart interaction board. At this time, the touch operation control may be performed to the system associated with the second channel of the smart interaction board, that is, the user may perform the touch operation on the display interface of the system associated with the second channel, the touch request for the system associated with the second channel may be accepted by the smart interaction board, and transmitted to the system associated with the second channel. The system associated with the second channel performs a corresponding operation in response to the touch request to acquire the result view. Through acquiring and displaying the result view obtained by the system associated with the second channel in response to the touch request through performing an operation corresponding to the touch request, the user may watch the displayed result view after performing the touch operation immediately.

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be object to the protection scope of the claims

## Claims

1. A method of channel switching in a smart interaction board, comprising following steps:
receiving a channel switching request of switching from a first channel to a second channel;
detecting a state of a system associated with the second channel; and
when the state of the system associated with the second channel is a sleep state or a dormant state, according to the channel switching request, switching a touch receiving service to the system associated with the second channel and switching a current display from the first channel to the second channel, and waking up the system associated with the second channel.

2. The method of channel switching in the smart interaction board according to claim 1, further comprising a step of:
when it is detected that the state of the system associated with the second channel is a work state, according to the channel switching request, switching the touch receiving service to the system associated with the second channel and switching the current display from the first channel to the second channel.

3. The method of channel switching in the smart interaction board according to claim 1, wherein the waking up the system associated with the second channel comprises a step of:
transmitting a waking up instruction to the system associated with the second channel to control the system associated with the second channel to switch from the sleep state or the dormant state to the work state.

4. The method of channel switching in the smart interaction board according to any one of claims 1 to 3, wherein, after the according to the channel switching request, switching the touch receiving service to the system associated with the second channel and switching the current display from the first channel to the second channel, and waking up the system associated with the second channel, further comprises a step of:
receiving a touch request for a display interface of the system associated with the second channel;
transmitting the touch request to the system associated with the second channel; and
acquiring and displaying a result view obtained by the system associated with the second channel in response to the touch request through performing an operation corresponding to the touch request.

5. The method of channel switching in the smart interaction board according to any one of claims 1 to 3, wherein the first channel is a TV channel, the second channel is a PC channel, a system associated with the first channel is an Android system, and the system associated with the first channel is a Windows system.

6. An apparatus of channel switching in a smart interaction board, comprising:
a switching request receiving module configured to receive a channel switching request of switching from a first channel to a second channel;
a state detecting module configured to detect a state of a system associated with the second channel; and
a switching module configured to when the state of the system associated with the second channel is a sleep state or a dormant state, according to the channel switching request, switch a touch receiving service to the system associated with the second channel and switch a current display from the first channel to the second channel, and wake up the system associated with the second channel.

7. The apparatus of channel switching in the smart interaction board according to claim 6, wherein, the switching module is further configured to when the state detecting module detects that the state of the system associated with the second channel is a work state, according to the channel switching request, switch the touch receiving service to the system associated with the second channel and switch the current display from the first channel to the second channel.

8. The apparatus of channel switching in the smart interaction board according to claim 6, wherein the switching module comprises:
a waking up module, configured to transmit a waking up instruction to the system associated with the second channel, and control the system associated with the second channel to switch from the sleep state or the dormant state to the work state.

9. The apparatus of channel switching in the smart interaction board according to any one of claims 6 to 8, further comprising:
a touch request receiving module configured to receive a touch request for a display interface of the system associated with the second channel;
a request transmitting module configured to transmit the touch request to the system associated with the second channel; and
a view acquiring module configured to acquire and display a result view obtained by the system associated with the second channel in response to the touch request through performing an operation corresponding to the touch request.

10. The apparatus of channel switching in the smart interaction board according to any one of claims 6 to 8, wherein the first channel is a TV channel, the second channel is a PC channel, a system associated with the first channel is an Android system, and the system associated with the first channel is a Windows system.
